# EUROPÄISCHE PATENTANMELDUNG

(11) **EP 3 211 197 A1**
(43) Veröffentlichungstag der Anmeldung: **30.08.2017**
(21) Anmeldenummer: 17152628.8
(22) Anmeldetag: 23.01.2017
(51) Int. Cl.: F02B 37/18

(54) **VENTILELEMENT**

(30) Priorität: 26.02.2016 DE 102016002269
(71) Anmelder: Feinguss Blank GmbH, 88499 Riedlingen (DE)
(72) Erfinder: Diemer, Reinhard, 88499 Altheim (DE); Bitzer, Ingo, 88339 Bad Waldsee (DE)
(74) Vertreter: Glawe, Delfs, Moll

(57) **Zusammenfassung**

Ventilelement (1) für einen Abgasturbolader, mit
einer eine Längserstreckung aufweisenden Ventilwelle (2),
einem sich seitlich in Bezug auf die Längserstreckung der Ventilwelle von dieser erstreckendem Hebel (3) mit einer durchgehenden Öffnung,
einem Ventilklappenteller (4a, 4b),
einem im wesentlichen scheibenförmigen Befestigungselement und
einem sich durch die durchgehende Öffnung erstreckenden und den Ventilklappenteller mit dem Befestigungselement verbindenden Schaft,
wobei ein Federelement (10, 15, 25, 26) zur Erzeugung einer Vorspannung zwischen Schaft und Hebel vorgesehen ist.

## Beschreibung

### Technisches Gebiet

Die vorliegende Erfindung betrifft ein Ventilelement und insbesondere ein Ventilelement zur Verwendung bei der Ladedruckregulierung in einem Abgasturbolader.

### Beschreibung des Standes der Technik

Ventilelemente für Abgasturbolader sind bekannt und bspw. in der DE 10 2015 008 426 A1 beschrieben.

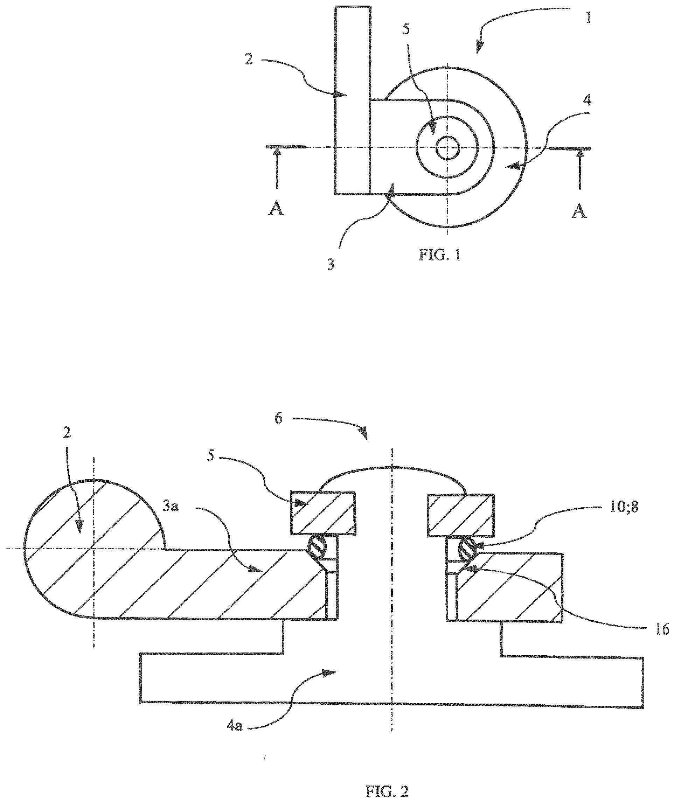

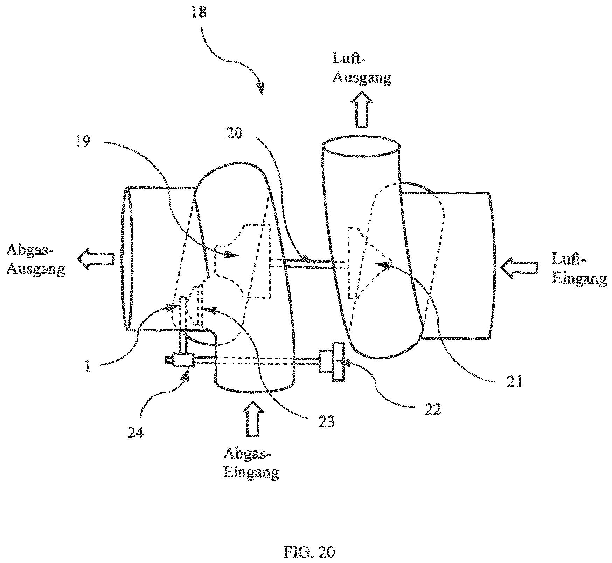

Derartige Ventilelemente werden gemeinhin als Wastegate-Ventile bezeichnet. Die generelle und bekannte Funktionsweise eines Abgasturboladers mit einer Wastegate-Ventilvorrichtung wird im folgenden unter Bezugnahme auf die Figuren 1 und 20 beschrieben.

Im Lastbetrieb des Motors wird das Wastegate-Ventilelement 1 - umfassend eine drehbar gelagerte Spindel 2, einen an einem Ende der Spindel angebrachten und seitlich abstehenden Hebel 3 mit durchgehender Öffnung, einen (Ventil-)Klappenteller 4 mit einem einseitig zentrisch an dem Klappenteller angebrachten oder integrierten Schaft zur Durchführung durch die Hebelöffnung und eine Scheibe 5 als Befestigungselement an einem durchgeführten Schaftende des Klappentellers 4 - von einem Stellantrieb 22 und einer Stellanordnung 24 geschlossen. Dabei wird der Klappenteller 4 durch Schwenken des Ventilelements 1 auf einen Ventilsitz 23 gepresst. Dadurch wird der gesamte Abgasstrom über ein abgasseitiges Turbinenrad 19 geleitet, das fest mit einer Verbindungswelle 20 und einem ansaugseitigen Verdichterrad 21 verbunden ist. Der Abgasstrom beschleunigt das Turbinenrad 19 mitsamt der Verbindungswelle 20 und dem ansaugseitigen Verdichterrad 21. Die notwendige Verbrennungsluft wird dadurch von dem Verdichterrad 21 komprimiert und unter Überdruck über den Ladeluftkühler einem Brennraum zugeführt, was eine bedeutend bessere und effektivere Verbrennung des Treibstoffs bewirkt und zu einer höheren Leistungsabgabe des Motors führt.

Im Teillast- oder Schiebebetrieb des Motors wird diese Luftverdichtung weniger oder nicht benötigt. Daher öffnet bei dieser Fahrweise der Stellantrieb 22 über die Stellanordnung 24 das Ventil 1 und lässt den Großteil des Abgasstroms direkt und ohne Umweg über das Turbinenrad 19 durch das "Wastegate" in den Auspuff entweichen, und die Luftverdichtung wird reduziert bzw. unterbunden. Dabei wird auch der Motorgegendruck reduziert. Der niedrigere Gegendruck reduziert die Pumparbeit und verbessert die Kraftstoffökonomie.

Im Betrieb stellt sich die Problematik, dass die Temperatur des Abgases Werte von über 1.000 °C erreichen kann. Die dabei entstehende Wärme wird ungleichmäßig an die beteiligten mechanischen Bauteile abgegeben. Dadurch kann es zu Spannungen und Verzügen in den mechanischen Bauteilen (Gehäuse, Klappenteller 4, Ventilsitz 23, Hebel 3 usw. - vgl. Figur 20) kommen. Bei starrer Anordnung der Bauteile Klappenteller 4 und Hebel 3 kann dies zu Undichtigkeiten zwischen dem Ventilsitz 23 und der Dichtfläche des Klappentellers 4 führen, da der Klappenteller evtl. schief auf dem Ventilsitz aufsitzt.

Um hier einen Ausgleich zu schaffen, ist es bekannt, die Verbindung zwischen Klappenteller 4 und Hebel 3 mit einem gewissen radialen Spiel zwischen Klappentellerschaft und Hebelbohrung und mit einem gewissen axialen Spiel zwischen Hebel 3 und Befestigungsscheibe 5 ausgeführt, d.h. der Klappentellerschaft mit dem Klappenteller wackelt in der Hebelbohrung. Wird das Wastegate-Ventilelement 1 mittels des Stellantriebs 22 und der Stellanordnung 24 geöffnet, strömt ein Großteil des Abgases mit hoher Geschwindigkeit turbulent über den mit Spiel an dem Hebel 3 befestigten Klappenteller 4 und bringt diesen zum Flattern. Dabei kann der Klappenteller 4 unkontrolliert gegen den Hebel 3 und/oder den Ventilsitz 23 schlagen und die Scheibe 5 gegen den Hebel 3. Es entsteht ein unerwünschtes Klappergeräusch und es kann zu erhöhtem Verschleiß an den einzelnen Elementen führen.

### Zusammenfassung der Erfindung

Demgegenüber wird erfindungsgemäß ein Ventilelement mit den Merkmalen des Anspruchs 1 vorgeschlagen.

Der Erfindung liegt die Erkenntnis zugrunde, ein gattungsgemäßes Ventilelement dahingehend weiterzubilden, dass ein Federelement zur Erzeugung einer Vorspannung zwischen Schaft und Hebel vorgesehen ist.

Gemäß der Erfindung kann das Federelement dazu ausgebildet sein, eine bezüglich des Ventiltellerschafts radial wirkende Federkraft zu entfalten.

Mit der erfindungsgemäßen Lösung wird ein bislang auftretendes und störendes Flattern des Ventilklappentellers bei geöffnetem Wastegate verhindert und damit das Klappergeräusch eliminiert. Darüber hinaus wird der Verschleiß an den einzelnen Bauteilen einer Wastegate-Ventilvorrichtung mit einem erfindungsgemäßen Ventilelement reduziert.

Weitere Ausgestaltungen der Erfindung sind in den weiteren Unteransprüchen beschrieben.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung stark schematisch und nicht maßstabsgetreu dargestellt und wird im folgenden unter Bezugnahme auf die Zeichnung ausführlich beschrieben.

### Kurzbeschreibung der Zeichnung

Figur 1 zeigt ein montiertes Wastegate-Ventilelement mit schwenkbarer Spindel, davon seitlich abstehendem Hebel, Klappenteller und Scheibe in Draufsicht.
Figur 2 zeigt ein erfindungsgemäßes Wastegate-Ventilelement in seitlicher Schnittdarstellung gemäß der Schnittlinie A-A der Figur 1.
Figur 3 zeigt eine alternative Ausführungsform des Wastegate-Ventilelements der Figur 2 in seitlicher Schnittdarstellung.
Figur 4 zeigt ein erfindungsgemäßes ringförmiges Federelement mit Aussparung für eine scheibenseitige Anordnung in Draufsicht.
Figur 5 zeigt eine Schnittdarstellung durch eine Ausführungsform des erfindungsgemäßen Federelements gemäß der Schnittlinie B-B der Figur 4 mit einer ersten Profilform.
Figur 6 zeigt eine Schnittdarstellung durch eine weitere Ausführungsform des erfindungsgemäßen Federelements gemäß der Schnittlinie B-B der Figur 4 mit einer zweiten Profilform.
Figur 7 zeigt eine Schnittdarstellung durch eine weitere Ausführungsform des erfindungsgemäßen Federelements gemäß der Schnittlinie B-B der Figur 4 mit einer dritten Profilform.
Figur 8 zeigt eine weitere Ausführungsform des erfindungsgemäßen Ventilelements in seitlicher Schnittdarstellung gemäß der Schnittlinie A-A der Figur 1.
Figur 9 zeigt eine Variante des erfindungsgemäßen Ventilelements der Figur 8.
Figur 10 zeigt ein erfindungsgemäßes ringförmiges Federelement mit Aussparung für eine tellerseitige Anordnung in Draufsicht.
Figur 11 zeigt eine Schnittdarstellung durch eine Ausführungsform des erfindungsgemäßen Federelements gemäß der Schnittlinie C-C der Figur 10 mit einer ersten Profilform.
Figur 12 zeigt eine Schnittdarstellung durch eine weitere Ausführungsform des erfindungsgemäßen Federelements gemäß der Schnittlinie C-C der Figur 10 mit einer zweiten Profilform.
Figur 13 zeigt eine Schnittdarstellung durch eine weitere Ausführungsform des erfindungsgemäßen Federelements gemäß der Schnittlinie C-C der Figur 10 mit einer dritten Profilform.
Figur 14 zeigt eine vergrößerte Ausschnittsdetaildarstellung der Figur 3.
Figur 15 zeigt eine vergrößerte Ausschnittsdetaildarstellung der Figur 2.
Figuren 16 und 16a veranschaulichen die erfindungsgemäße Funktionsweise bei schief aufgesetztem Klappenteller bei scheibenseitiger Montage.
Figur 17 zeigt eine vergrößerte Ausschnittsdetaildarstellung der Figur 9.
Figur 18 zeigt eine vergrößerte Ausschnittsdetaildarstellung der Figur 8.
Figur 19 veranschaulicht die erfindungsgemäße Funktionsweise bei schief aufgesetztem Klappenteller bei tellerseitiger Montage.
Figur 20 zeigt in schematischer Darstellung die Funktionsweise eines Abgasturboladers mit Wastegateventilanordnung.
Figuren 21 und 22 zeigen vergrößerte Ausschnittsdetaildarstellungen der Ausführungsform der Figur 8 mit in der Hebelbohrung angeordneter Fase.
Figuren 23 und 23a zeigen vergrößerte Ausschnittsdetaildarstellungen der Ausführungsform der Figur 28 als geschweißte Version.
Figuren 24 und 24a zeigen vergrößerte Ausschnittsdetaildarstellungen der Ausführungsform der Figur 3 mit in der Scheibenbohrung angeordneter Fase.
Figuren 25 und 25a zeigen vergrößerte Ausschnittsdetaildarstellungen der Ausführungsform der Figur 27 als genietete Version.
Figur 26 zeigt ein erfindungsgemäßes radial wirkendes mäanderringförmiges Federelement.
Figur 27 zeigt den Schnitt A-A durch das erfindungsgemäße Ventilelement mit tellerseitig montiertem ringförmigem Federelement in einer genieteten Variante.
Figur 28 zeigt den Schnitt A-A durch das erfindungsgemäße Ventilelement mit scheibenseitig montiertem ringförmigem Federelement in einer geschweißten Variante.
Figur 29 zeigt in Draufsicht ein ringförmiges Federelement mit Aussparung mit Trapezprofil für tellerseitige und scheibenseitige Anordnungen gemäß den Figuren 27 bzw. 28.
Figur 30 zeigt eine Schnittdarstellung durch die erfindungsgemäßen Federelemente der Figuren 26 und 29 mit einem Trapezprofil gemäß der Schnittlinie D-D der Figur 29.

### Ausführliche Beschreibung

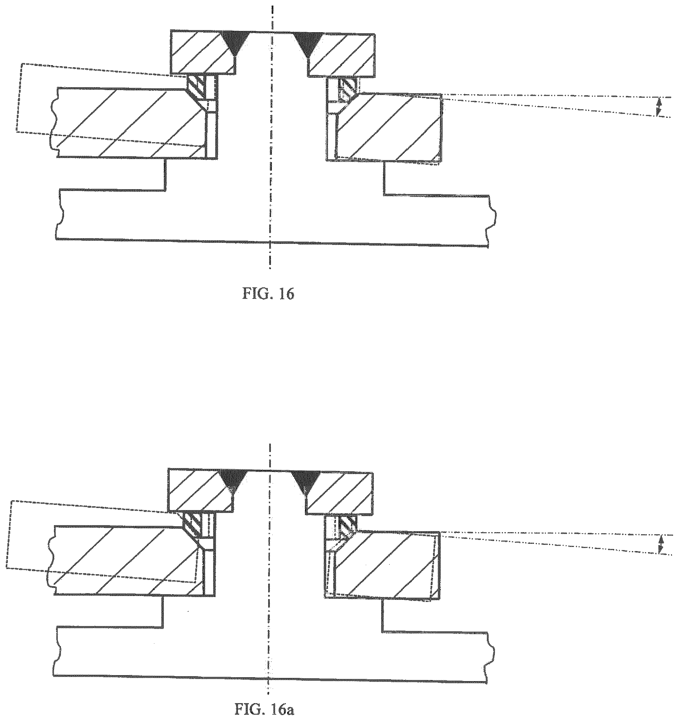

Figur 2 zeigt den Schnitt A-A durch das Ventilelement 1 bei einer Nietversion 6 mit scheibenseitig montiertem ringförmigem Federelement 10 oder 25 mit Ellipsen-(Kreis-)Profil 8. Der Schaft des Klappentellers für Nietbefestigung 4a ist durch die Öffnung im Hebel 3a geführt. Tellerseitig liegt die seitliche Fläche des Hebels 3a eben an der erhabenen Fläche des Klappentellers 4a an. Zwischen der Hebelbohrung und dem Klappentellerschaft ist das radiale Spiel zu erkennen. Scheibenseitig ist an der Hebelbohrung die Fase 16 zu erkennen, in der das Federelement 10 oder 25 mit Spiel zum Klappentellerschaft angeordnet ist. Die Scheibe 5 ist auf Anschlag auf den Absatz am Klappentellerschaft genietet, wobei das Federelement 10 oder 25 etwas in die Fase 16 gedrückt und dabei vorgespannt wird. Der Abstand zwischen scheibenseitiger Hebelfläche und hebelseitiger Scheibenfläche ist das axiale Spiel (Spaltmaß), um das sich der Klappenteller mit Schaft und fest aufgenieteter Scheibe 5 in axialer Richtung in der Hebelbohrung bewegen lässt. Der Querschnitt des Federelementes 10 oder 25 muss größer sein als das axiale Spiel. So kann das Federelement 10 oder 25 nicht aus seinem Einbringbereich austreten. Wird der Klappenteller 4a auf einen durch Verzug schiefen Ventilsitz 23 aufgepresst, so bewirkt dies auch eine Schiefstellung des Klappentellers mit Schaft und Scheibe. Dadurch wird das Federelement tiefer in die Fase 16 gedrückt und dabei durch die schräge Fase 16 radial zusammengedrückt und noch mehr gespannt. Die Rückstellkraft des Federelementes 10 oder 25 nimmt zu, bis die Scheibe 5 auf der Hebelfläche aufsitzt. Damit ist der mechanische Endanschlag erreicht und das Federelement 10 oder 25 kann nicht weiter gedehnt werden. Eine Überlastung des Federelementes 10 oder 25 ist damit ausgeschlossen (siehe hierzu auch Figur 16 und Figur 16a). Wird die Wastegate-Ventilvorrichtung geöffnet, bewirkt die Rückstellkraft des Federelementes 10 oder 25 über die Fase 16, dass der Klappenteller 4a sofort in axialer Richtung in seine Ausgangslage zurückkehrt und dort durch die Vorspannung gehalten wird, auch wenn er durch das Abgas angeströmt wird. Damit wird ein Klappern vermieden.

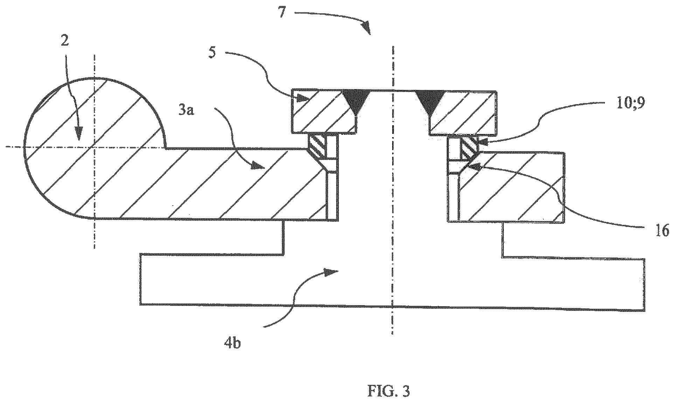

Figur 3 ist eine Variante der Figur 2. Sie zeigt den Schnitt A-A durch das Ventilelement 1 bei einer Schweißversion 7 mit scheibenseitig montiertem ringförmigem Federelement 10 oder 25 mit Rechteck-mit-abgeschnittener-Ecke-Profil 9. Der Schaft des Klappentellers für Schweißbefestigung 4b ist durch die Öffnung im Hebel 3a geführt. Tellerseitig liegt die seitliche Fläche des Hebels 3a eben an der erhabenen Fläche des Klappentellers 4b an. Zwischen der Hebelbohrung und dem Klappentellerschaft ist das radiale Spiel zu erkennen. Scheibenseitig ist an der Hebelbohrung die Fase 16 zu erkennen, in der das Federelement 10 oder 25 mit Spiel zum Klappentellerschaft angeordnet ist. Die Scheibe 5 ist auf Anschlag auf den Absatz am Klappentellerschaftes geschweißt, wobei das Federelement 10 oder 25 etwas in die Fase 16 gedrückt und dabei vorgespannt wird. Der Abstand zwischen scheibenseitiger Hebelfläche und hebelseitiger Scheibenfläche ist das axiale Spiel (Spaltmaß), um das sich der Klappenteller mit Schaft und fest aufgeschweißter Scheibe 5 in axialer Richtung in der Hebelbohrung bewegen lässt. Der Querschnitt des Federelementes 10 oder 25 muss größer sein als das axiale Spiel. So kann das Federelement 10 oder 25 nicht aus seinem Einbringbereich austreten. Wird der Klappenteller 4b auf einen durch Verzug schiefen Ventilsitz aufgepresst, so bewirkt dies auch eine Schiefstellung des Klappentellers mit Schaft und Scheibe. Dadurch wird das Federelement tiefer in die Fase 16 gedrückt und dabei durch die schräge Fase 16 radial zusammengedrückt und noch mehr gespannt. Die Rückstellkraft des Federelementes 10 oder 25 nimmt zu, bis die Scheibe 5 auf der Hebelfläche aufsitzt. Damit ist der mechanische Endanschlag erreicht und das Federelement 10 oder 25 kann nicht weiter gedehnt werden. Eine Überlastung des Federelementes 10 oder 25 ist damit ausgeschlossen (siehe hierzu auch Figur 16 und Figur 16a). Wird das Wastegate-Ventil geöffnet, bewirkt die Rückstellkraft des Federelementes 10 oder 25 über die Fase 16, dass der Klappenteller 4b sofort in axialer Richtung in seine Ausgangslage zurückkehrt und dort durch die Vorspannung gehalten wird, auch wenn er durch das Abgas angeströmt wird. Damit wird ein Klappern vermieden.

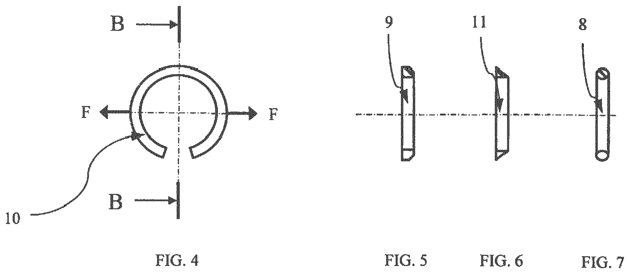

Figur 4 zeigt das ringförmige Federelement mit Aussparung für scheibenseitige Anordnung 10 in der Draufsicht. Der Ring ist nicht geschlossen, so dass ein Federweg möglich ist. Die Federkraft wirkt radial.

Figur 5 zeigt den Schnitt B-B durch das Federelement für scheibenseitige Anordnung 10 mit Rechteck-mit-abgeschnittener-Ecke-Profil 9, Figur 6 zeigt den Schnitt B-B durch das Federelement für scheibenseitige Anordnung 10 mit Dreieck-Profil 11 und Figur 7 zeigt den Schnitt B-B durch das Federelement für scheibenseitige Anordnung 10 mit Ellipsen- (Kreis-)Profil 8.

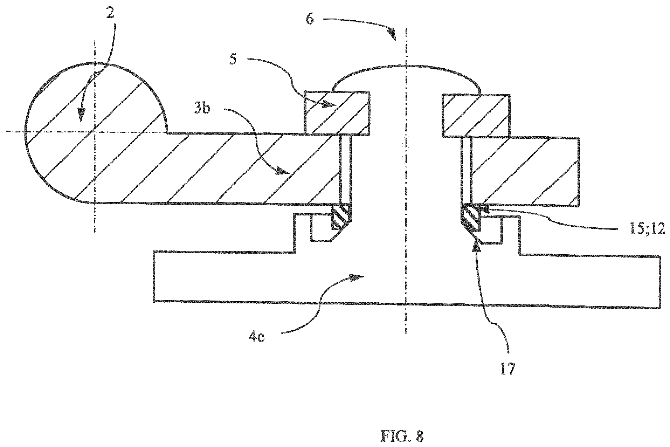

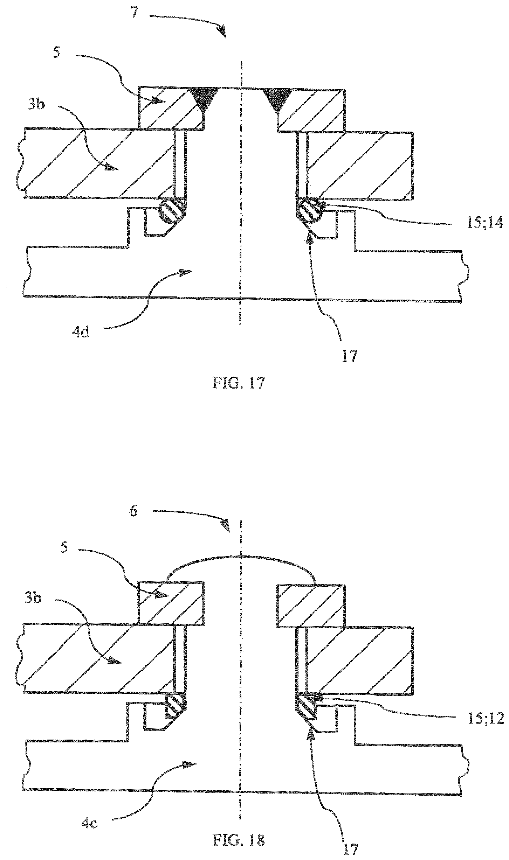

Figur 8 zeigt den Schnitt A-A durch das Wastegate-Ventilelement 1 bei einer Nietversion 6 mit tellerseitig montiertem ringförmigem Federelement 15 oder 25 mit Rechteck-mit-abgeschnittener-Ecke-Profil 12. Der Schaft des Klappentellers für Nietbefestigung 4c ist durch die Öffnung im Hebel 3b geführt. Scheibenseitig liegt die seitliche Fläche des Hebels 3b eben an der hebelseitigen Fläche der Scheibe 5 an. Zwischen der Hebelbohrung und dem Klappentellerschaft ist das radiale Spiel zu erkennen. In den erhabenen Bereich des Klappentellers 4c ist eine Ringnut koaxial zum Schaft eingearbeitet, die in eine Fase 17 am Klappentellerschaft übergeht. Die Ringnut ist der Einbringbereich zur Aufnahme des ringförmigen Federelementes 15 oder 25, wenn dieses durch die tellerseitige Fläche des Hebels 3b nach unten gedrückt wird. Das Federelement 15 oder 25 ist auf dem Klappentellerschaft ohne Spiel angeordnet. Die Scheibe 5 ist auf Anschlag auf den Absatz am Klappentellerschaft genietet. Das Federelement 15 oder 25 wird dabei etwas auf die Fase 17 gedrückt und dabei vorgespannt. Der Abstand zwischen tellerseitiger Hebelfläche und dem erhabenen Ring auf dem Klappenteller 4c ist das axiale Spiel (Spaltmaß), um das sich der Klappenteller mit Schaft 4c und fest aufgenieteter Scheibe 5 in axialer Richtung in der Hebelbohrung bewegen lässt. Der Querschnitt des Federelementes 15 oder 25 muss größer sein als das axiale Spiel. So kann das Federelement 15 oder 25 nicht aus seinem Einbringbereich austreten. Wird der Klappenteller 4c auf einen durch Verzug schiefen Ventilsitz 23 aufgepresst, so bewirkt dies auch eine Schiefstellung des Klappentellers mit Schaft 4c und Scheibe 5. Dadurch wird das Federelement tiefer auf die Fase 17 gedrückt und dabei durch die schräge Fase 17 radial gedehnt und noch mehr gespannt. Die Rückstellkraft des Federelementes 15 oder 25 nimmt zu, bis die Hebelfläche auf dem Klappentellerring aufsitzt. Damit ist der mechanische Endanschlag erreicht und das Federelement 15 oder 25 kann nicht weiter gedehnt werden. Eine Überlastung des Federelementes 15 oder 25 ist damit ausgeschlossen (siehe hierzu auch Figur 17 und Figur 18 und Figur 19. Wird das Wastegate-Ventil geöffnet, bewirkt die Rückstellkraft des Federelementes 15 oder 25 über die Fase 17, dass der Klappenteller 4c sofort in axialer Richtung in seine Ausgangslage zurückkehrt und dort durch die Vorspannung gehalten wird, auch wenn er durch das Abgas angeströmt wird. Damit wird ein Klappern vermieden.

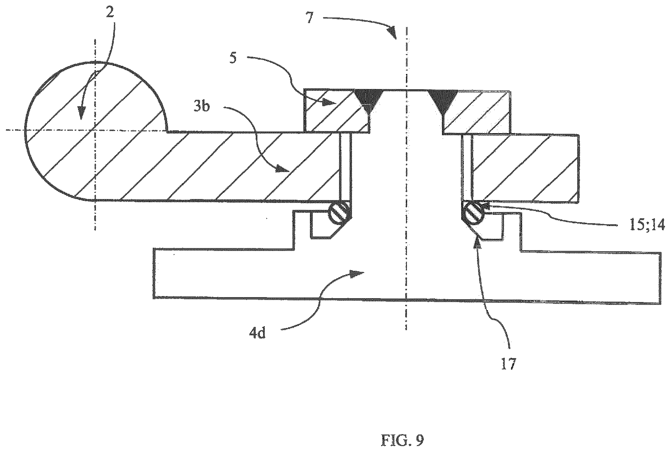

Figur 9 ist eine Variante von Figur 8. Sie zeigt den Schnitt A-A durch das Wastegate-Ventilelement 1 bei einer Schweißversion 7 mit tellerseitig montiertem ringförmigem Federelement 15 oder 25 mit Ellipsen- bzw. Kreisprofil 14. Der Schaft des Klappentellers für Schweißbefestigung 4d ist durch die Öffnung im Hebel 3b geführt. Scheibenseitig liegt die seitliche Fläche des Hebels 3b eben an der hebelseitigen Fläche der Scheibe 5 an. Zwischen der Hebelbohrung und dem Klappentellerschaft ist das radiale Spiel zu erkennen. In den erhabenen Bereich des Klappentellers 4d ist eine Ringnut koaxial zum Schaft eingearbeitet, die in eine Fase 17 am Klappentellerschaft übergeht. Die Ringnut ist der Einbringbereich zur Aufnahme des ringförmigen Federelementes 15 oder 25, wenn dieses durch die tellerseitige Fläche des Hebels 3b nach unten gedrückt wird. Das Federelement 15 oder 25 ist auf dem Klappentellerschaft ohne Spiel angeordnet. Die Scheibe 5 ist auf Anschlag auf den Absatz am Klappentellerschaft genietet. Das Federelement 15 oder 25 wird dabei etwas auf die Fase 17 gedrückt und dabei vorgespannt. Der Abstand zwischen tellerseitiger Hebelfläche und dem erhabenen Ring auf dem Klappenteller 4d ist das axiale Spiel (Spaltmaß), um das sich der Klappenteller mit Schaft 4d und fest aufgenieteter Scheibe 5 in axialer Richtung in der Hebelbohrung bewegen lässt. Der Querschnitt des Federelementes 15 oder 25 muss größer sein als das axiale Spiel. So kann das Federelement 15 oder 25 nicht aus seinem Einbringbereich austreten. Wird der Klappenteller 4d auf einen durch Verzug schiefen Ventilsitz 23 aufgepresst, so bewirkt dies auch eine Schiefstellung des Klappentellers mit Schaft 4d und Scheibe 5. Dadurch wird das Federelement tiefer auf die Fase 17 gedrückt und dabei durch die schräge Fase 17 radial gedehnt und noch mehr gespannt. Die Rückstellkraft des Federelementes 15 oder 25 nimmt zu, bis die Hebelfläche auf dem Klappentellerring aufsitzt. Damit ist der mechanische Endanschlag erreicht und das Federelement 15 oder 25 kann nicht weiter gedehnt werden. Eine Überlastung des Federelementes 15 oder 25 ist damit ausgeschlossen (siehe hierzu auch Figur 17 und Figur 18 und Figur 19). Wird die Wastegate-Ventilvorrichtung geöffnet, bewirkt die Rückstellkraft des Federelementes 15 oder 25 über die Fase 17, dass der Klappenteller 4d sofort in axialer Richtung in seine Ausgangslage zurückkehrt und dort durch die Vorspannung gehalten wird, auch wenn er durch das Abgas angeströmt wird. Damit wird ein Klappern vermieden.

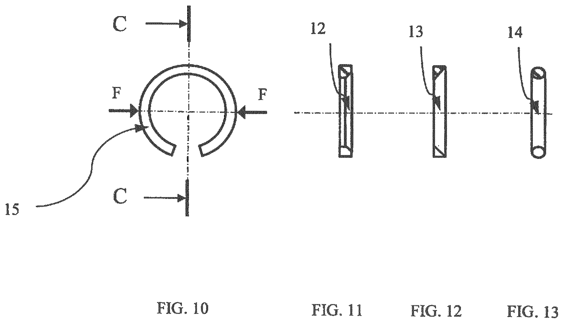

Figur 10 zeigt das ringförmige Federelement mit Aussparung für tellerseitige Anordnung 15 in der Draufsicht. Der Ring ist nicht geschlossen, so dass ein Federweg möglich ist. Die Federkraft wirkt radial.

Figur 11 zeigt den Schnitt C-C durch das Federelement für scheibenseitige Anordnung 15 mit Rechteck-mit-abgeschnittener-Ecke-Profil 12, Figur 12 zeigt den Schnitt C-C durch das Federelement für scheibenseitige Anordnung 15 mit Dreieck-Profil 13 und Figur 13 zeigt den Schnitt C-C durch das Federelement für scheibenseitige Anordnung 15 mit Ellipsen- (Kreis-)Profil 14.

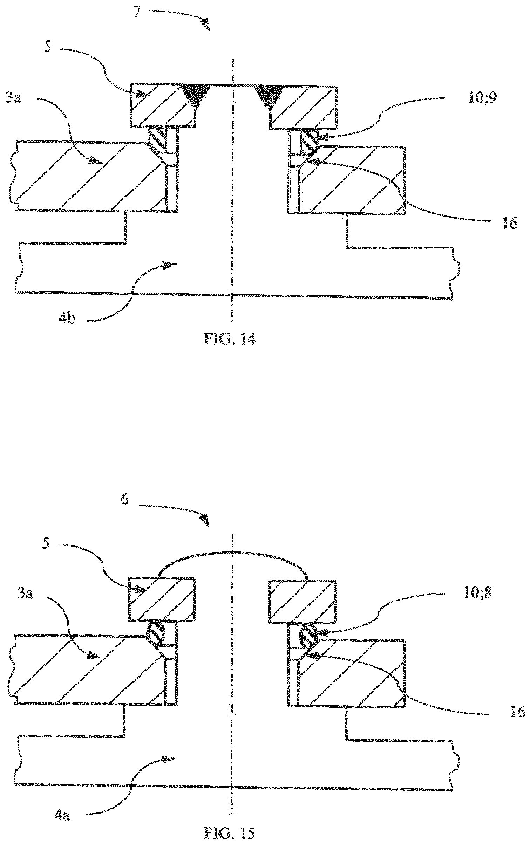

Figur 14 zeigt Details von Figur 3, und Figur 15 zeigt Details von Figur 2.

Figur 16 und Figur 16a zeigen die Funktionsweise des Federelementes 10 oder 25 bei schief aufgesetztem Klappenteller 4b bei scheibenseitiger Montage.

Figur 17 zeigt Details von Figur 9 und Figur 18 zeigt Details von Figur 8.

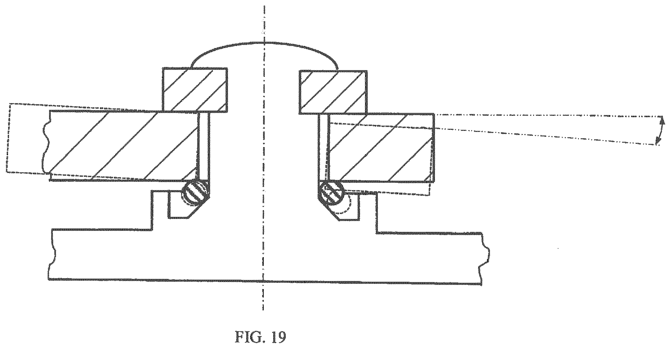

Figur 19 zeigt die Funktionsweise des Federelementes 15 oder 25 bei schief aufgesetztem Klappenteller 4c bei tellerseitiger Montage. Hier ist auch gemäß Patentanspruch 17 ersichtlich, dass das Aufsetzen des Klappentellers 4c und die Ausrichtung vor dem eigentlichen Spannen erfolgen, damit sanfter und materialschonender.

Figur 20 zeigt schematisch einen Abgasturbolader 18 mit Wastegate-Ventilsitz 23 und Wastegate-Ventilelement 1, Stellantrieb 22 und Stellanordnung 24 für das Wastegate-Ventilelement 1, das abgasseitige Turbinenrad 19 mit Verbindungswelle 20 und das zuluftseitige Verdichterrad 21.

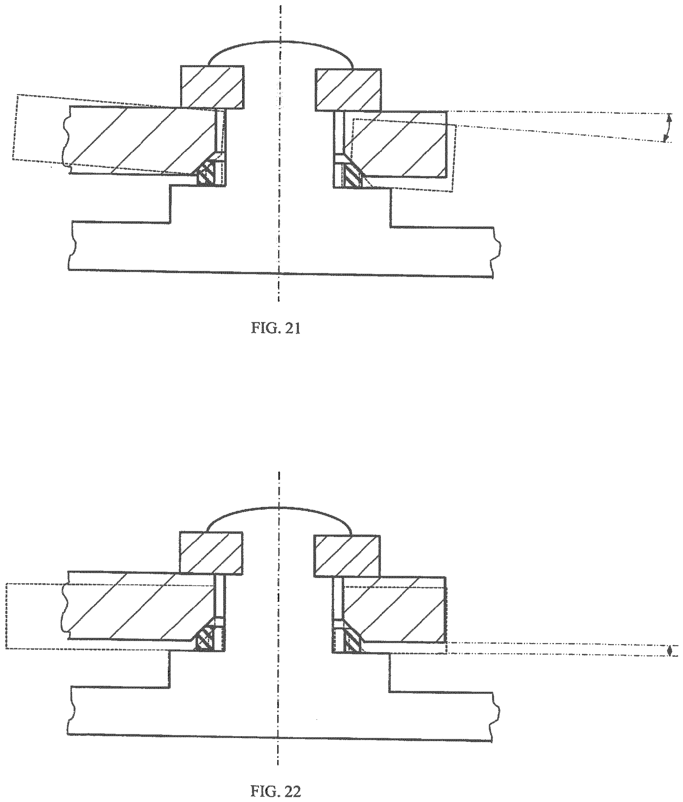

Figur 21 und Figur 22 entsprechen in der Funktionsweise Figur 8, allerdings ist hierbei die Fase nicht in einer Ringnut im Klappenteller, sondern in der Hebelbohrung angeordnet.

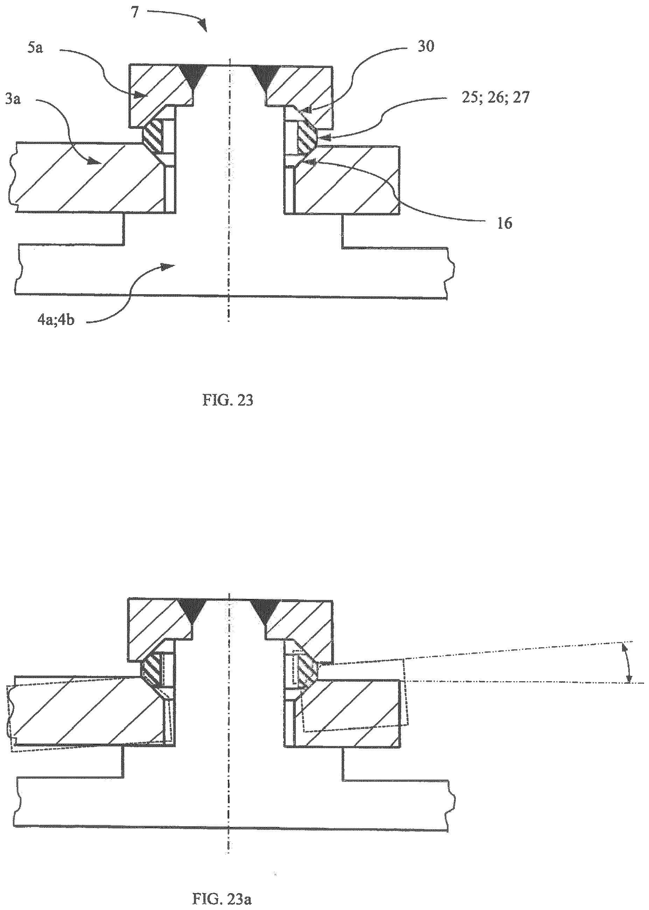

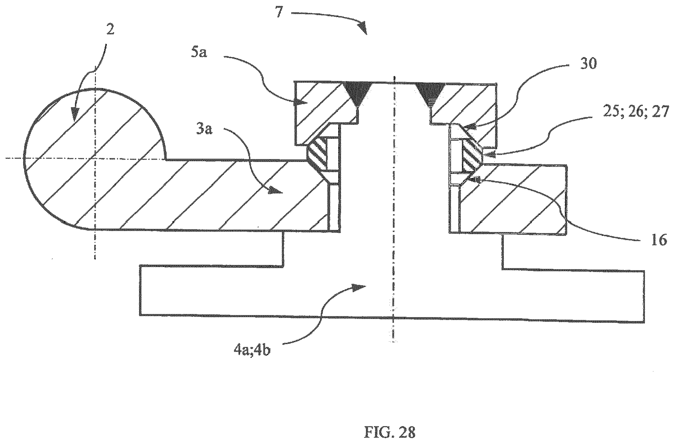

Figur 23 und Figur 23a zeigen Details von Figur 28 als geschweißte Version

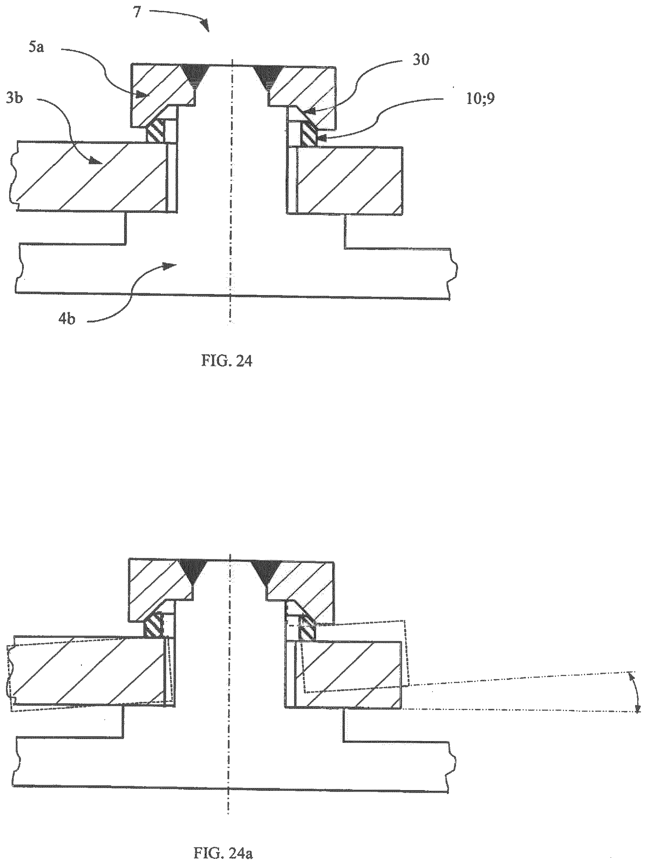

Figur 24 und Figur 24a entsprechen in der Funktionsweise Figur 3, allerdings ist hierbei die Fase nicht in der Hebelbohrung, sondern in der Scheibenbohrung angeordnet.

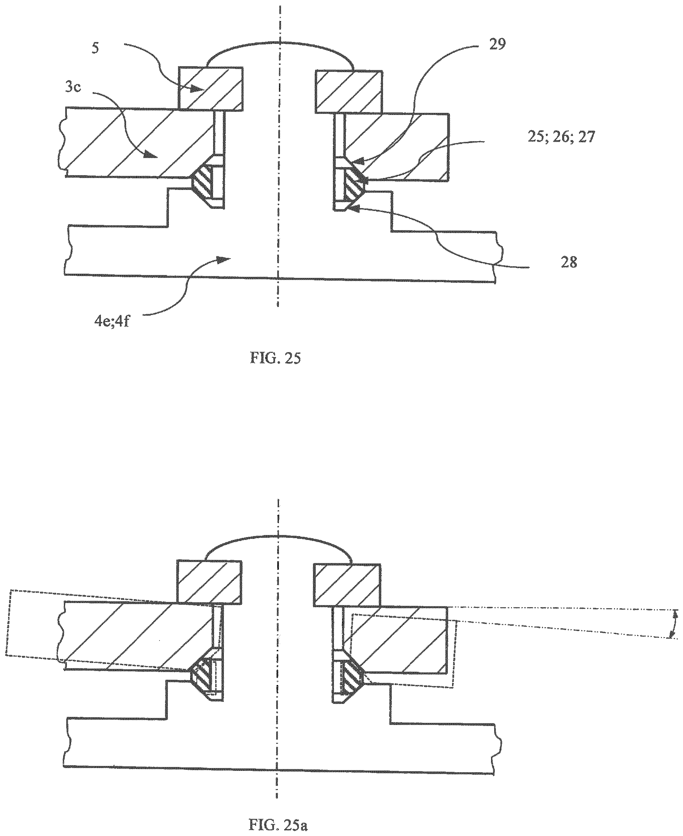

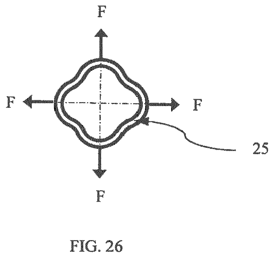

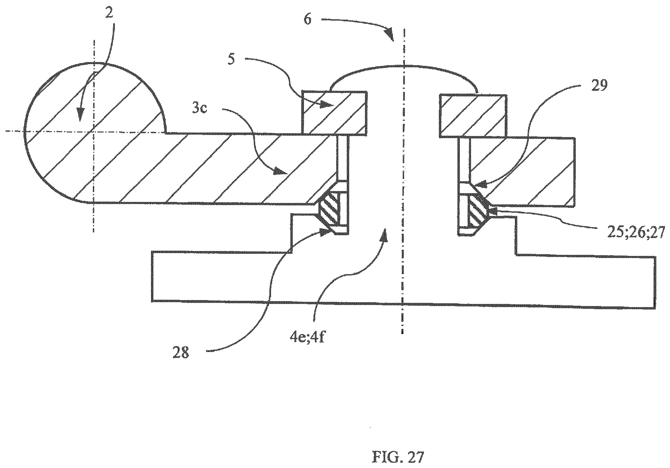

Figur 25 und Figur 25a zeigen Details von Figur 27 als genietete Version. Figur 26 zeigt die Draufsicht des mäanderringförmigen radial wirkenden Federelementes 25.

Figur 27 zeigt den Schnitt A-A durch das Wastegate-Ventilelement 1 bei einer Nietversion 6 mit tellerseitig montiertem ringförmigem Federelement 26 oder 25 mit Trapez-Profil 27. Der Schaft des Klappentellers 4e, 4f ist durch die Öffnung im Hebel 3c geführt. Scheibenseitig liegt die seitliche Fläche des Hebels 3c eben an der hebelseitigen Fläche der Scheibe 5 an. Zwischen der Hebelbohrung und dem Klappentellerschaft ist das radiale Spiel zu erkennen. In den erhabenen Bereich des Klappentellers 4e, 4f ist eine Ringnut koaxial zum Schaft eingearbeitet, die in eine Fase 28 übergeht. Gegenüber ist tellerseitig in der Hebelbohrung ebenfalls eine Fase 29 eingearbeitet. Der zwischen diesen beiden Fasen 28 und 29 bestehende Raum ist der Einbringbereich zur Aufnahme des ringförmigen Federelementes 26 oder 25 mit Trapez-Profil 27. Das Federelement 26 oder 25 stützt sich mit seinen beiden schrägen Flächen sowohl gegen die Fase 28 im Klappenteller 4e, 4f als auch gegen die Fase 29 im Hebel 3c ab. Die Scheibe 5 ist auf Anschlag auf den Absatz am Klappentellerschaft genietet. Das Federelement 26 oder 25 wird dabei etwas in die Fasen 28 und 29 gedrückt und dabei vorgespannt. Hierbei erfolgt eine Zentrierung des Klappentellers mit Schaft 4e, 4f in der Bohrung des Hebels 3c. Der Abstand zwischen tellerseitiger Hebelfläche und dem erhabenen Ring auf dem Klappenteller 4e, 4f ist das axiale Spiel (Spaltmaß), um das sich der Klappenteller mit Schaft 4e, 4f und fest aufgenieteter Scheibe 5 in axialer Richtung in der Hebelbohrung bewegen lässt. Der Querschnitt des Federelementes 26 oder 25 muss größer sein als das axiale Spiel. So kann das Federelement 26 oder 25 nicht aus seinem Einbringbereich austreten. Wird der Klappenteller 4e, 4f auf einen durch Verzug schiefen Ventilsitz 23 aufgepresst, so bewirkt dies auch eine Schiefstellung des Klappentellers mit Schaft 4e, 4f und Scheibe 5. Dadurch wird das Federelement tiefer auf die Fasen 28 und 29 gedrückt und dabei durch die schrägen Fasen 28 und 29 radial gedehnt und noch mehr gespannt. Die Rückstellkraft des Federelementes 26 oder 25 nimmt zu, bis die Hebelfläche auf dem Klappentellerring aufsitzt. Damit ist der mechanische Endanschlag erreicht und das Federelement 26 oder 25 kann nicht weiter gedehnt werden. Eine Überlastung des Federelementes 26 oder 25 ist damit ausgeschlossen (siehe hierzu auch Figur 25a. Wird das Wastegate-Ventil geöffnet, bewirkt die Rückstellkraft des Federelementes 26 oder 25 über die Fasen 28 und 29, dass der Klappenteller 4e, 4f sofort in axialer und radialer Richtung in seine zentrierte Ausgangslage zurückkehrt und dort durch die Vorspannung gehalten wird, auch wenn er durch das Abgas angeströmt wird. Damit wird ein Klappern vermieden.

Figur 28 zeigt den Schnitt A-A durch das Wastegate-Ventilelement 1 bei einer Schweißversion 7 mit scheibenseitig montiertem ringförmigem Federelement 26 oder 25 mit Trapez-Profil 27. Der Schaft des Klappentellers 4a, 4b ist durch die Öffnung im Hebel 3a geführt. Tellerseitig liegt die seitliche Fläche des Hebels 3a eben an der hebelseitigen erhabenen Fläche des Klappentellers 4a, 4b an. Zwischen der Hebelbohrung und dem Klappentellerschaft ist das radiale Spiel zu erkennen. In die hebelseitige Fläche der Scheibe 5a ist eine Fase 30 eingearbeitet. Gegenüber ist scheibenseitig in der Hebelbohrung ebenfalls eine Fase 16 eingearbeitet. Der zwischen diesen beiden Fasen 30 und 16 bestehende Raum ist der Einbringbereich zur Aufnahme des ringförmigen Federelementes 26 oder 25 mit Trapez-Profil 27. Das Federelement 26 oder 25 stützt sich mit seinen beiden schrägen Flächen sowohl gegen die Fase 30 in der Scheibe 5a als auch gegen die Fase 16 im Hebel 3a ab. Die Scheibe 5a ist auf Anschlag auf den Absatz am Klappentellerschaft geschweißt. Das Federelement 26 oder 25 wird dabei etwas in die Fasen 30 und 16 gedrückt und dabei vorgespannt. Hierbei erfolgt eine Zentrierung des Klappentellers mit Schaft 4a, 4b in der Bohrung des Hebels 3a. Der Abstand zwischen scheibenseitiger Hebelfläche und der hebelseitigen planen äußeren Ringfläche an der Scheibe 5a ist das axiale Spiel (Spaltmaß), um das sich der Klappenteller mit Schaft 4a,4b und fest aufgeschweißter Scheibe 5a in axialer Richtung in der Hebelbohrung bewegen lässt. Der Querschnitt des Federelementes 26 oder 25 muss größer sein als das axiale Spiel. So kann das Federelement 26 oder 25 nicht aus seinem Einbringbereich austreten. Wird der Klappenteller 4a, 4b auf einen durch Verzug schiefen Ventilsitz 23 aufgepresst, so bewirkt dies auch eine Schiefstellung des Klappentellers mit Schaft 4a, 4b und Scheibe 5a. Dadurch wird das Federelement tiefer auf die Fasen 30 und 16 gedrückt und dabei durch die schrägen Fasen 30 und 16 radial gedehnt und noch mehr gespannt. Die Rückstellkraft des Federelementes 26 oder 25 nimmt zu, bis die Hebelfläche auf dem Scheibenring aufsitzt. Damit ist der mechanische Endanschlag erreicht und das Federelement 26 oder 25 kann nicht weiter gedehnt werden. Eine Überlastung des Federelementes 26 oder 25 ist damit ausgeschlossen (siehe hierzu auch Figur 23a). Wird das Wastegate-Ventil geöffnet, bewirkt die Rückstellkraft des Federelementes 26 oder 25 über die Fasen 30 und 16, dass der Klappenteller 4a, 4b sofort in axialer und radialer Richtung in seine zentrierte Ausgangslage zurückkehrt und dort durch die Vorspannung gehalten wird, auch wenn er durch das Abgas angeströmt wird. Damit wird ein Klappern vermieden.

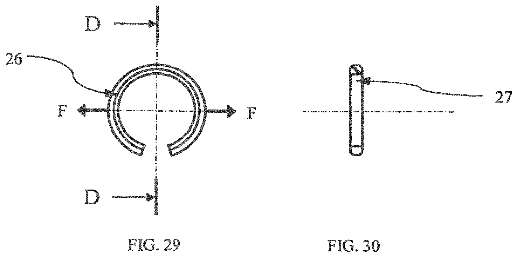

Figur 29 zeigt das ringförmige Federelement mit Aussparung 26 mit Trapezprofil 27 für tellerseitige und scheibenseitige Anordnung gemäß Figur 27 und Figur 28 in der Draufsicht. Der Ring ist nicht geschlossen, so dass ein Federweg möglich ist. Die Federkraft wirkt radial.

Figur 30 zeigt das Trapezprofil 27 der Federelemente 26 und 25.

Die Verwendung eines radial wirkenden ringförmigen Federelementes zwischen der Befestigungsscheibe und dem Hebel (scheibenseitige Variante) bzw. zwischen dem Hebel und dem Klappenteller (tellerseitige Variante) an einer oder zwei Fasen beseitigt das Flattern des Klappentellers durch eine gewisse dauerhafte Vorspannung. Dazu wird die Ausgestaltung der Fasen und des ringförmigen Federelementes so gewählt, dass das Federelement schon bei der Montage geringfügig in axialer Richtung zum Klappentellerschaft auf die Fase/n geschoben wird. Dabei wird das Federelement in radialer Richtung gespannt. Durch die Abstützung an der /den Fasenschräge/n wirkt hierbei auch eine Rückstellkraft in axialer Richtung und bei Abstützung an zwei gegenüber liegenden Fasen eine Zentrierung.

Das Federelement wirkt schwingungsdämpfend bei geöffnetem Wastegate-Ventil und stabilisiert den Klappenteller in seiner Ausgangslage. Im geschlossenen Zustand lässt das Federelement eine Schiefstellung des Klappentellers im Rahmen des axialen und radialen Spiels zu. Beim Öffnen wird durch die Rückstellkraft des Federelementes sofort wieder die Ausgangslage hergestellt.

Die im jeweiligen Anwendungsfall benötigte Rückstell- bzw. Haltekraft des Federelementes kann durch Veränderung des Fasenwinkels, der Federkennlinie, der Federgeometrie und des axialen und radialen Spiels eingestellt werden. Den optimalen Werkstoff für den jeweiligen Anwendungsfall können die Experten der Federhersteller festlegen.

Die Ausgestaltung des Einbringbereichs bzw. Verbauraums für das Federelement und die Geometrie des Federelementes sind so zu wählen, dass das Federelement in seinem Einbringbereich komplett aufgenommen werden kann, wenn der Hebel sowohl scheibenseitig als auch tellerseitig auf Block gedrückt wird (mechanischer Endanschlag). Dadurch kann das Federelement nicht überdehnt bzw. überlastet werden.

Die Verwendung der erfindungsgemäßen Anwendung ist unabhängig vom Befestigungsverfahren der Scheibe am Klappentellerbolzen. Die Scheibe kann geschweißt, genietet, aufgeschrumpft usw. sein.

Die erfindungsgemäße Ventilvorrichtung kann turbinenseitig und/oder verdichterseitig an einen Bypass eines Abgasturboladers angeordnet werden.

## Patentansprüche

1. Ventilelement (1) für einen Abgasturbolader, mit einer eine Längserstreckung aufweisenden Spindel (2), einem sich seitlich in Bezug auf die Längserstreckung der Spindel von dieser erstreckendem Hebel mit einer durchgehenden Öffnung,
einem Ventilklappenteller (4a, 4b),
einem im wesentlichen scheibenförmigen Befestigungselement und
einem sich durch die durchgehende Öffnung erstreckenden und den Ventilklappenteller mit dem Befestigungselement verbindenden Schaft,
wobei der Ventilklappenteller und das Befestigungselement mittels eines sich durch die durchgehende Öffnung des Hebels erstreckenden Schafts miteinander verbunden sind und
wobei ein Federelement zur Erzeugung einer Vorspannung zwischen Schaft und Hebel vorgesehen ist.

2. Ventilelement (1) nach Anspruch 1, bei dem das Federelement eine bezüglich des Schafts radiale Federkraftwirkung entfaltet, und/oder bei dem das Federelement im Querschnitt ein Trapezprofil, ein Dreiecksprofil, ein Fünfecksprofil oder ein Ellipsen- bzw. Kreisprofil aufweist.

3. Ventilelement (1) nach Anspruch 1 oder 2, bei dem das Federelement im wesentlichen mäanderringförmig oder ringsegmentförmig ist.

4. Ventilelement (1) nach einem der Ansprüche 1 bis 3, das im Bereich des Schafts einen Einbringbereich zur Aufnahme des Federelements aufweist, wobei der Einbringbereich vorzugsweise zwischen dem Hebel und dem Befestigungselement ausgebildet ist und weiter vorzugsweise durch eine erste Hebelausnehmung (16) an einer zu dem Befestigungselement weisenden Kante der durchgehenden Öffnung des Hebels gebildet ist, so dass das eingebrachte Federelement an der ersten Hebelausnehmung (16) und an dem Befestigungselement anliegt und weiter vorzugsweise des weiteren durch eine Befestigungselementausnehmung (30) an einer zu dem Hebel weisenden Seite des Befestigungselements gebildet ist, so dass das eingebrachte Federelement an der ersten Hebelausnehmung (16) und an der Befestigungselementausnehmung (30) anliegt.

5. Ventilelement (1) nach Anspruch 4, bei dem die erste Hebelausnehmung eine an der zu dem Befestigungselement weisenden Kante der durchgehenden Öffnung des Hebels koaxial zu dem Schaft ausgebildete Fase (16) ist.

6. Ventilelement (1) nach Anspruch 4 oder 5, bei dem die Befestigungselementausnehmung eine an der zu dem Hebel weisenden Seite des Befestigungselements koaxial zu dem Schaft ausgebildete Fase (30) ist.

7. Ventilelement (1) nach einem der Ansprüche 4 bis 6, bei dem ein Querschnitt des Federelements dicker ist als ein axiales Spiel zwischen Anlageflächen des Hebels und des Befestigungselements ist.

8. Ventilelement (1) nach Anspruch 4, bei dem der Einbringbereich zwischen dem Hebel und dem Ventilklappenteller ausgebildet ist.

9. Ventilelement (1) nach Anspruch 8, bei dem der Einbringbereich durch eine Tellerausnehmung (28) an einer zu der durchgehenden Öffnung des Hebels weisenden Seite gebildet ist, so dass das eingebrachte Federelement an der Tellerausnehmung (28) und an dem Hebel anliegt.

10. Ventilelement (1) nach Anspruch 9, bei dem der Einbringbereich des weiteren durch zweite Hebelausnehmung (29) an einer zu dem Ventilklappenteller weisenden Kante der durchgehenden Öffnung des Hebels gebildet ist, so dass das eingebrachte Federelement an der Tellerausnehmung (28) und an der zweiten Hebelausnehmung (29) anliegt.

11. Ventilelement (1) nach Anspruch 9 oder 10, bei dem die Tellerausnehmung eine an einem Übergang von dem Ventilklappenteller zu dem Schaft ausgebildete Nut mit Fase (17, 28) ist.

12. Ventilelement (1) nach Anspruch 10, bei dem die zweite Hebelausnehmung eine an der zu dem Ventilklappenteller weisenden Kante der durchgehenden Öffnung des Hebels koaxial zu dem Schaft ausgebildete Fase (29) ist.

13. Ventilelement (1) nach einem der Ansprüche 8 bis 12, bei dem ein Querschnitt des Federelements dicker ist als ein axiales Spiel zwischen Anlageflächen des Ventilklappentellers und des Befestigungselements ist.

14. Ventilelement (1) nach einem der Ansprüche 4 bis 13, bei dem der Einbringbereich derart ausgestaltet ist, dass nach einem eventuellen Bruch des Federelements dessen Fragmente in dem Einbringbereich verbleiben.

15. Ventilelement (1) nach einem der Ansprüche 11 bis 14, bei dem der Einbringbereich in Bezug auf den sich durch die durchgehende Öffnung des Hebels erstreckenden Schaft schräg verlaufende Anliegeflächen umfasst, derart dass bei einer Bewegung des Ventilklappentellers und des Schafts relativ zu dem Hebel eine radial wirkende Federkraft resultiert, die den Ventilklappenteller auch bei einer Umströmung mit Abgasen in Richtung seiner zu der durchgehenden Öffnung zentrischen Ausgangslage drückt.
